## Europäisches Patentamt
## European Patent Office
## Office européen des brevets

(11) Veröffentlichungsnummer : **0 034 707**
**B1**

(12)

# EUROPÄISCHE PATENTSCHRIFT

(45) Veröffentlichungstag der Patentschrift :
15.08.84

(51) Int. Cl.³ : **B 44 C 1/02**, B 44 C 1/00,
B 44 C 5/04

(21) Anmeldenummer : 81100471.2

(22) Anmeldetag : 23.01.81

(54) Verfahren zum Herstellen von farblichen und figürlichen Dessinierungen von Formkörpern aus Kunststoff.

(30) Priorität : 22.02.80 DE 3006604

(43) Veröffentlichungstag der Anmeldung :
02.09.81 Patentblatt 81/35

(45) Bekanntmachung des Hinweises auf die Patenterteilung : 15.08.84 Patentblatt 84/33

(84) Benannte Vertragsstaaten :
AT BE CH DE FR GB IT LI LU NL SE

(56) Entgegenhaltungen :
DE-A- 1 571 088
DE-A- 1 679 907
DE-A- 1 910 799
DE-A- 2 129 053
DE-A- 2 132 188

(73) Patentinhaber : **DYNAMIT NOBEL AKTIENGESELL-
SCHAFT**
**Postfach 1209**
**D-5210 Troisdorf, Bez. Köln (DE)**

(72) Erfinder : **Spiess, Karl-Heinz**
**Wiesenstrasse 53**
**D-5203 Much-Schwellenbach (DE)**
Erfinder : **Stock, Harald**
**Ittenbacherstrasse 66**
**D-5330 Königswinter 21 (DE)**

Jouve, 18, rue St-Denis, 75001 Paris, France

# 0 034 707

## Beschreibung

Die Erfindung betrifft ein Verfahren zum Herstellen von farblichen und figürlichen Dessinierungen von Formkörpern aus polymerem Kunststoff der im Oberbegriff von Anspruch 1 bezeichneten Art.

Es ist eine Reihe von Verfahren zum Herstellen von ein- oder mehrfarbig gemusterten Formkörpern aus Kunststoff bekannt, wobei jedoch die herstellbaren Dessinierungen jeweils von der angewandten Verfahrenstechnik zum Herstellen des Kunststofformkörpers abhängen. Beispielsweise ist es bekannt, gemusterte Platten durch Extrusion herzustellen, wobei entweder mehrschichtige Platten mit zwei oder mehr planparallelen Schichten unterschiedlicher Einfärbung oder durchgehend strukturierte Materialien mit einer oder mehreren Farben oder längsorientierter Muster, wie (vgl. DE-A-25 34 724), erzielbar sind. Durchgehende Musterungen mit gleichmäßiger regelloser Struktur oder gleichgerichteter Struktur sind auch beispielsweise nach dem sogenannten Blockverfahren möglich (vgl. DE-B-14 79 090), das jedoch durch die vielen Produktionsstufen mit hohen Herstellkosten verbunden ist.

Es ist auch bekannt, Kunststoff-Flächengebilde, z. B. Bodenbeläge, nach dem Kalanderverfahren mit mehrfarbiger durchgehender Marmorierung herzustellen. Hierbei ist aber die marmorierte Struktur durch durch das vorgegebene Kalandrierverfahren längs orientiert ausgerichtet und kann nicht wahlweise in eine beliebige Dessinierung durch entsprechende Verfahrensänderung abgewandelt werden. Darüber hinaus ist es bekannt, Formkörper, wie Bahnen, Folien oder Platten aus Kunststoff durch Bedrucken der Oberfläche beliebig zu dessinieren. Hierbei ist jedoch die Abriebfestigkeit der auf die Kunststoffoberfläche aufgedruckten Farben gering, da der Farbmittelauftrag nur sehr dünn ist und die Farbmittel nicht ausreichend tief in das Kunststoffmaterial eindrigen können. Um bei Anwendung der Drucktechnik zu einer höheren Nutzungsdauer zu kommen, und die Druckfarbe gegen den Abrieb zu schützen, wird daher vielfach eine transparente Deckschicht über dem aufgedruckten Muster vorgesehen. Bei solchen Produkten wird die Nutzungsdauer bestimmt durch die Dicke der transparenten Deckschicht, da nach ihrem Abrieb wiederum die Zerstörung des aufgedruckten Musters beginnt.

Die bekannten Verfahren zur Herstellung von ein- oder mehrfarbig dessinierten Flächengebilden aus Kunststoff sind also entweder durch die vorgegebene Verfahrenstechnik, z. B. Kalandrieren, Extrudieren, in den Dessinierungsmöglichkeiten begrenzt oder ergeben bei einer freien Auswahl der Dessinierung, wie sie beispielsweise die Drucktechnik zuläßt, eine Einschränkung der gewünschten physikalischen und mechanischen Eigenschaften, da das Muster nur in geringer dem Farbauftrag entsprechender Dicke vorhanden ist. Letzteres wirkt sich besonders bei solchen Produkten, die im späteren Gebrauch starken Abnutzungseffekten der bemusterten Fläche unterliegen, beispielsweise Fußbodenbelägen, Spielbällen, usw., sehr nachteilig aus.

Aus der DE-A-1 679 907 ist ein Verfahren bekannt, um polymere Kunststoffe mit einem Farbstoff homogen zu versetzen, wonach der Kunststoff zu Formkörpern verarbeitet wird. Durch lokale Aussetzung des Kunststoffes einer Wärme- und Sauerstoffeinwirkung wird die Farbe des Farbstoffes geändert.

Aus der DE-A-1 910 799 ist ein Verfahren zum Herstellen von Dessinierungen (Abbildern) auf einer Oberfläche eines strahlungsempfindlichen Materials bekannt, wobei die Transponier- und Fixierungsschritte für die Herstellung des fotografischen Bildes mittels UV-Licht und die Entaktivierung des Materials anschließend mittels sichtbarem Licht durchgeführt wird.

Es ist ferner bekannt, daß durch den Einfluß energiereicher ionisierender Strahlen an insbesondere organische Farbmitteln Veränderungen auftreten, die sich in einer Änderung der Farbe des Farbmittels anzeigen. Diese Tatsache hat man sich zur Herstellung von Dosimeter für ionisierende Strahlen zu Nutze gemacht, wozu wir nur beispielweise auf die US-PS 40 01 587 verweisen. In der Regel werden diese Farbdosimeter für ionisierende Strahlen zum Messen großer Strahlungsdosen eingesetzt, da in der Regel die Veränderungen der Farbe von bestrahlten Farbmitteln erst bei Einsatz relativ hoher Bestrahlungsdosen auftreten. Im Zusammenhang mit Kunststoffen ist festzustellen, daß die in der Regel in der Farbdosimetrie angewendeten Bestrahlungsdosen besonders die mechanischen Eigenschaften von Kunststoffen bereits stark verändern. Hierzu wird auf das Buch von B. Dolezel, Die beständigkeit von Kunststoffen und Gummi, Karl-Hanser-Verlag 1978, Kapitel über Beständigkeit gegen die ionisierende Strahlung, Seiten 303 bis 336, verwiesen.

Der Einsatz von ionisierenden Strahlen, insbesondere Elektronenstrahlen für technische Anwendungen ist erst auf einigen Gebieten erschlossen, beispielsweise für die Lackhärtung mittels Elektronenstrahlen, für die Vernetzung von Kunststoffen, z. B. in der Gummiindustrie und dergleichen.

Der Erfindung liegt die Aufgabe zugrunde, ein Verfahren zum Herstellen von farblichen und figürlichen Dessinierungen von Formkörpern aus Kunststoff mit Farbmitteln zu schaffen, mit dem es möglich ist, in eingefärbten Formkörpern durchgehende oder teilweise durchgehende farbliche und figürliche Dessinierungen reproduzierbar und unabhängig von dem Herstellungsverfahren der Formkörper aus Kunststoff zu schaffen.

Die Erfindung zeigt nun einen Weg, das an sich bekannte Verhalten von Farbmitteln und Kunststoffen unter dem Einfluß ionisierender Strahlen zur Lösung der gestellten Aufgabe in einer überraschenden und erfolgreichen Weise auszunutzen.

Gemäß der Erfindung wird diese Aufgabe dadurch gelöst, daß bei einem Verfahren der eingangs genannten Art die Formkörper in ausgewählten Bereichen entsprechend der figürlichen Dessinierung Elektronenstrahlen bis zum Erzielen von Farbumschlägen ausgesetzt werden.

2

Mit der Erfindung ist es möglich, bei Kunststofformkörpern sowohl flächige als auch dreidimensionale Dessinierungen definierbar und reproduzierbar herzustellen. So können vorgefertigte Formkörper, zum Beispiel Bahnen, Platten und Folien, die kalandriert oder extrudiert oder gestrichen werden oder laminiert sind, einschichtig oder mehrschichtig, durchgehend oder teilweise eingefärbte, spritzgegossene Formkörper, gegebenenfalls mit transparenten oder opaken Bereichen, dessiniert werden.

Für die Erfindung werden als veränderbare Farbmittel insbesondere organische Farbstoffe und/oder organische Pigmente vorgeschlagen, wie beispielsweise die sich beim Einfärben von Kunststoffen bewährt habenden Monoazo-Farbstoffe, Diazo-Farbstoffe, Anthrachinon-Farbstoffe, Metallkomplex-Farbstoffe, Chinophthalon-Farbstoffe, Naphtazin-Farbstoffe, Perinon-Farbstoffe, Pyrazolon-Farbstoffe, Cumarin-Farbstoffe, Thioindigo-Farbstoffe, Thioxanthen-Farbstoffe oder organische Pigmente wie Diarylid-Pigmente, Pyrazolon-Pigmente, Disazo-Pigmente, Pigmente von β-Oxynaphtoesäure, Kupferphthalocyaninpigmente, Pigmente auf Basis der Derivate der Naphthalin- bzw. Perylentetracarbonsäure, Disazo-Kondensationspigmente, Dioxazin-Pigmente, Chinacridon-Pigmente, Thioindigo-Pigmente oder Isoindolinon-Pigmente.

Es können auch neben veränderbaren Farbmitteln solche Farbmittel, insbesondere anorganische Pigmente, zum Einfärben des Formkörpers eingesetzt werden, die sich bei den zur Anwendung kommenden Dosen von Elektronenstrahlen noch nicht verändern, also als farbstabil anzusehen sind. Auf diese Weise ist die Anzahl der Farben und Muster, die nach dem erfindungsgemäßen Verfahren herstellbar sind, weiter vergrößerbar. Hierbei kommen Pigmente wie Titandioxyd-, Zinksulfid-, Eisenoxid-, Chromoxid-, Mischphasen-, Cadmium- und Chromat-Pigmente zur Anwendung.

Der Farbumschlag eines bestimmten Farbmittels ist nicht nur abhängig von der Strahlendosis, sondern auch von der Art des Polymeren bzw. der dem Kunststoff zugesetzten Zuschlagstoffe. Es wurde gefunden, daß die Veränderungen an den Farbmitteln und damit die Farbumschläge zum einen durch Anlagerung von infolge der Bestrahlung mit Elektronenstrahlen gebildeten freien Radikalen in dem Kunststofformkörper an die Farbmittel, zum anderen durch Umlagerung von Seitenketten der Farbmittel selbst oder auch durch Degradation der Farbmittel infolge der Bestrahlung, erzeugt werden. Eine weitere Ausgestaltung des erfindungsgemäßen Verfahrens sieht vor, daß Kunststoffe für die Herstellung der Formkörper eingesetzt werden, die bei geringer Strahlungsdosis bereits Radikale freisetzen. Es wurde erfindungsgemäß gefunden, daß solche Polymere, die bei ausreichend geringen Bestrahlungsdosen bereits Radikale freisetzen, die dann in eine Wechselwirkung mit den Farbmitteln treten können, die zum Erreichen einer Farbveränderung bei den Farbmitteln erforderliche Strahlungsdosis herabsetzen und damit Farbumschläge bei Bestrahlungsdosen erzielen, die zu keiner die spätere Anwendung störenden Beeinträchtigung der Eigenschaften der mitbestrahlten Kunststoffe führen. Hier tritt also der überraschende Effekt auf, daß durch die Auswahl bestimmter Polymere die zum Erzielen von Farbumschlägen von Farbmitteln durch Elektronenstrahlen erforderlichen Bestrahlungsdosen erheblich herabgesetzt werden. Aus diese Weise wird es möglich, auch Kunststoffe, die nur eine mäßige oder durchschnittliche Beständigkeit gegenüber Elektronenstrahlen aufweisen, dem erfindungsgemässen Verfahren zu unterwerfen.

In Abhängigkeit von den jeweils für den Formkörper eingesetzten Kunststoffen wird erfindungsgemäß mit einer Strahlendosis von $1 \cdot 10^4$ bis $20 \cdot 10^4$, vorzugsweise zwischen $1 \cdot 10^4$ bis $8 \cdot 10^4$ J/kg gearbeitet.

Bevorzugte Kunststoffe für die Anwendung des erfindungsgemäßen Verfahrens sind Cellulose-Derivate wie Cellulose-Acetate, Cellulose-Butyrat, Cellulose-Propionat, sowie Polyamide, Polyvinylchlorid, Weichpolyvinylchlorid, Epoxydharze, Polyolefine und Kautschuke, z. B. Butylkautschuk. Soweit im Zusammenhang mit der Erfindlung von Formkörpern aus Kunststoffen gesprochen wird, sind hierbei auch Kunststofformmassen mit eingeschlossen, d. h. Zusatzstoffe wie Weichmacher, Stabilisatoren, Gleitmittel, Füllstoffe und andere. Bei der Auswahl der Zusatzstoffe ist gegebenenfalls auch darauf zu achten, daß diese durch die Bestrahlung ihre Eigenschaften verändern können und gegebenenfalls Einfluß auf die Farbveränderung der Farbmittel nehmen können oder auch als Antirads d. h. die Beständigkeit des Kunststoffes erhöhend wirken können.

Sehr gegen Elektronenstrahlen beständige Kunststoffe, wie beispielsweise unmodifiziertes Polycarbonat, eignen sich weniger zum Einsatz für das erfindungsgemäße Verfahren. Erst bei hohen Bestrahlungsdosen finden hier geringe Farbumschläge der Farbmittel statt, da durch das strahlungsbeständige Polycarbonat keine Wechselwirkung mit dem Farbmittel eintreten kann. Es ist jedoch möglich, strahlenbeständige Kunststoffe durch Zusatz von weniger strahlungsbeständigen Zuschlagstoffen für den Einsatz nach dem erfindungsgemäßen Verfahren geeignet zu machen, d. h. es wird dann über die Bestrahlung und chemische Veränderung der Zuschlagstoffe eine Wechselwirkung mit den Farbmitteln erreicht, die zu einem Farbumschlag der Farbmittel bei geringen Strahlungsdosen führen kann. Es ist aber auch möglich, Farbmittel einzusetzen, die durch eine angemessene Strahlendosis degradiert werden und auch auf diese Art die Farbveränderung erzeugen.

Entsprechende Geräte zur Erzeugung von Elektronenstrahlen sind hinreichend bekannt.

Figürliche Dessinierungen der Formkörper nach dem erfindungsgemäßen Verfahren sind auf verschiedene Weise möglich. Eine Ausgestaltung der Erfindung sieht vor, daß die Formkörper während der Bestrahlung mit Elektronenstrahlen partiell mit Elektronenstrahlen absorbierenden oder reflektierenden Materialien abgedeckt sind. Diese Materialien können vorteilhaft als Schablonen mit Durch-

**0 034 707**

brechungen für die figürliche Dessinierung, beispielsweise als Bleischablonen oder Aluminiumschablonen ausgebildet sein. In den abgeschirmten Bereichen bleiben dann auf der Oberfläche und im Formkörper während der Bestrahlung die Originalfarben der Farbmittel erhalten, während in den bestrahlten Bereichen ein entsprechender Farbumschlag entsprechend der Strahlungsdosis und in Abhängigkeit von dem eingesetzten Farbmittel und dem eingesetzten Kunststoff stattfindet.

Gemäß einer weiteren Ausgestaltung der Erfindung ist es möglich, die Eindringtiefe der Elektronenstrahlen in den Formkörper durch Änderung der Beschleunigungsspannung beim Durchführen des Formkörpers durch eine Bestrahlungszone zu verändern, so daß über die Dicke des Formkörpers figürlich abgegrenzte unterschiedliche Farbbereiche, beispielsweise Farbkeile entstehen.

Eine weitere Möglichkeit figürliche Dessinierungen zu erzielen, besteht erfindungsgemäß darin, die Intensität der Elektronenstrahlen (Strahlstromstärke) über die bestrahlte Oberfläche des Formkörpers zu variieren, so daß entsprechend figürlich abgegrenzte unterschiedliche Farbbereiche auf der Oberfläche des Formkörpers ausgebildet werden. Es ist auch möglich, die verschiedenen hier aufgezeigten Möglichkeiten zum Erzielen von figürlichen Musterungen miteinander zu kombinieren. Die Energie der Elektronen wird in der Einheit Elektronenvolt ev, gemessen. Die Angabe, daß ein Elektronenstrahl eine Energie von 300 kev habe, bedeutet, daß die Elektronen ein elektrisches Feld mit einer Gesamtspannung von 300 kv durchlaufen haben, wobei jedes einzelne Teilchen eine Bewegungsenergie von 300 kev erhalten hat. Die Ausbeute der strahlenchemischen Reaktion im bestrahlten Formkörper hängt ab von der Anzahl der Elektronen, die während der Bestrahlungszeit auf die Schicht auftrifft, d. h. von der Intensität des Elektronenstrahls (Strahlstromstärke). Die Energie, die bei der Bestrahlung in einem Gramm des Materials absorbiert wird und zur Einleitung der chemischen Reaktion in dem Material zur Verfügung steht, nennt man Strahlendosis. Die Strahlendosis wird in J/kg gemessen. bei der Festlegung der Bestrahlungsdaten ist noch von Bedeutung die Eindringtiefe der Elektronen in die bestrahlte Materie.

In der Zeichnung wird das erfindungsgemäße Verfahren an Beispielen näher erläutert.

Es zeigen

Figur 1 schematisch den Aufbau eines Elektronen-Beschleunigers,

Figur 2 schematisch eine Elektronenstrahlange zur Durchführung des erfindungsgemäßen Verfahrens,

Figur 3 und 4 Schablonen zur Auflage auf die zu bestrahlenden Formkörper und

Figur 5 eine Querschnitt durch einen mehrschichtigen mehrfarbigen Formkörper vor einer Bestrahlung.

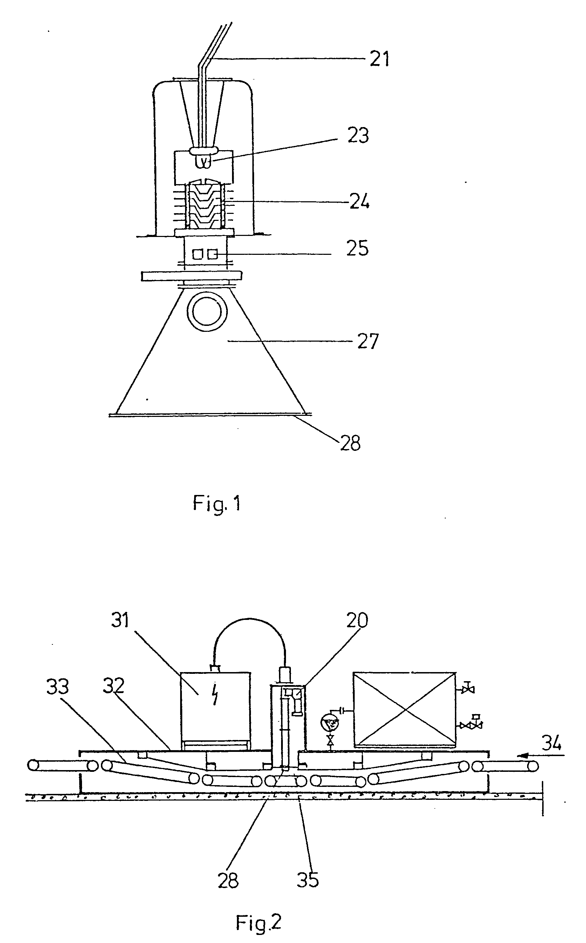

In der Figur 1 ist ein als Energiequelle zur Auslösung der chemischen Reaktionen im Formkörper einsetzbarer Elektronen-Beschleuniger 20, welcher freie Elektronen austrahlt, dargestellt. Diese Elektronen werden von der Glühkathode 23 durch Anlegen einer entsprechend hohen Beschleunigungsspannung 21, beispielsweise 1,5 MeV, erzeugt und mit nachfolgenden Beschleunigungs- und Ablenksystemen. 24, 25 zu dem gewünschten Strahlenvorhang in dem Scanner 27 aufgefächert, den sie an dem Scanner-Fenster 28 verlassen. Hierbei wird die vom Hochspannungsgleichrichter gelieferte elektrische Energie, Beschleunigungsspannung, praktisch vollständig in Strahlenenergie umgesetzt.

In Figur 2 ist schematisch eine Elektronenstrahlanlage zum Durchführen des erfindungsgemäßen Verfahrens dargestellt. Diese Anlage besteht im wesentlichen aus dem Elektronenbeschleuniger 20 der Transportanlage 33, auf der in Pfeilrichtung 34 die zu bestrahlenden Formkörper transportiert werden, aus dem Bestrahlungskanal 35, der mit einem Stahlbetonbunker 32 abgeschirmt ist, der Hochspannungsanlage 31 für den Elektronenbeschleuniger 20. Der Abstand zwischen Scanner-Fenster 28 und den auf dem Transportband 33 aufliegenden und geförderten Formkörpern ist einstellbar.

Nachfolgend werden Beispiele von erfindungsgemäß durch Bestrahlung dessinierten Formkörpern aufgeführt :

Beispiel 1

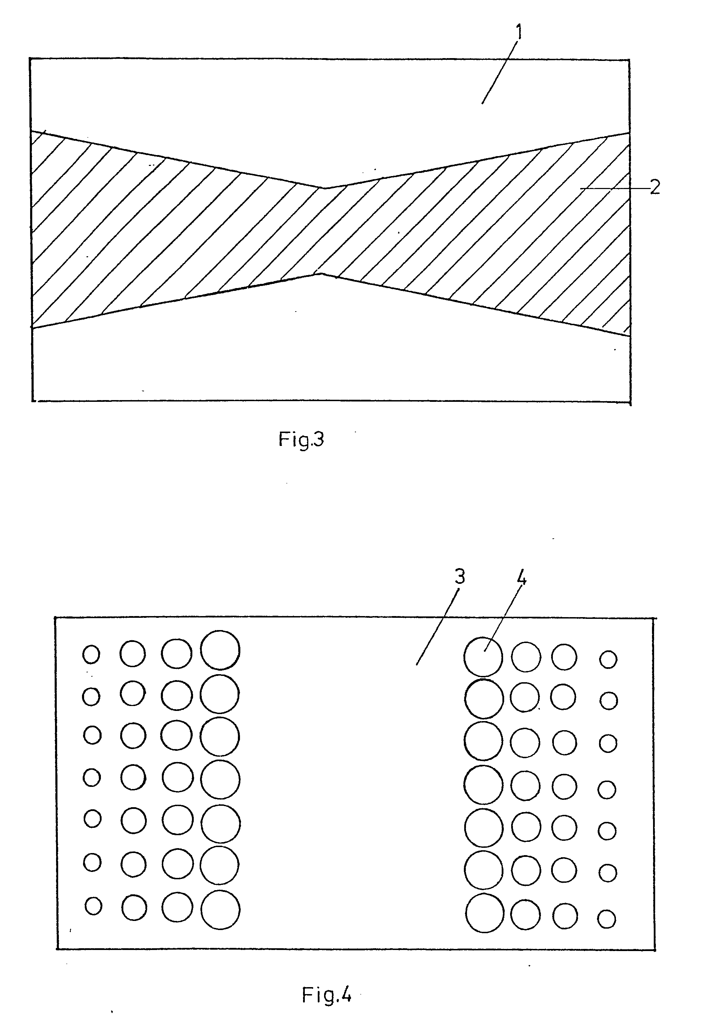

Als Formkörper wird aus Cellulosediacetat (54 % Essigsäure, 26 % Diäthyl-Phthalatweichmacher), das mit 0,02 % Solvapermgrün ® G (Solvent green 28) der Firma Hoechst AG eingefärbt wird, eine durchgefärbte Platte mit einer Dicke von 8 mm extrudiert. Gemäß Figur 3 wird auf diese Platte 1 die Bleischablone 2 einer Dicke 1 mm aufgelegt und die Platte 1 mit Bleischablone 2 einer Elektronenstrahlbehandlung in einer Anlage gemäß Figur 2 zum Herstellen eines farblichen und figürlichen Musters ausgesetzt. Bei einer Beschleunigungsspannung von 3,25 MeV, einer Strahlstromstärke von 2,4 mA, einem Vorschub von 1,4 m/m (Durchlaufgeschwindigkeit der Platte beim Scanner-Fenster) wird die Platte einer Strahlendosis von $4 \cdot 10^4$ J/kg ausgesetzt.

Nach der Strahlenbehandlung weist die Platte 1 im abgeschirmten Bereich unterhalb der Bleischablone 2 noch den Original-Grünton von Solvapermgrün G, wie sie eingefärbt worden ist, auf, wohingegen die der Strahlung ausgesetzten nicht abgedeckten Bereiche der Platte 1 einen Farbumschlag durchlaufen haben und nunmehr eine rotblaue Farbtönung zeigen.

Beispiel 2

Es wird ein Formkörper aus vier Schichten Celluloseacetat, Rezeptur wie bei Beispiel 1, die parallel

4

übereinander angeordnet sind, durch Extrusion hergestellt. Die Schichten in der Reihenfolge 1 bis 4 weisen unterschiedliche Dicken in der Folge 1,0 + 1,0 + 4,5 + 1,5 mm = 8 mm auf und sind wie folgt eingefärbt :

Schicht 1 mit 0,01 % Solvapermgrün ® G (Solvent green 28)
Schicht 2 mit 0,3 % Fettrot HRR ® ein Diazofarbstoff der Fa. Hoechst AG (Solvent red 23 Cl 26 100)
Schicht 3 mit 0,015 % Neozaponschwarz RE ® ein Farbstoff der BASF AG (Solvent black 27 Cl 12 195)
Schicht 4 mit 0,01 % Solvapermrotviolett R ® ein Antrachinonfarbstoff (Disperse violet 31 Cl 62025) der Hoechst AG.

Die durch Extrusion hergestellte 4-schichtige Platte 1 wird wiederum mit einer Schablone, wie in Figur 3 dargestellt belegt und einer Elektronenstrahlbehandlung ausgesetzt. Die Strahlungsbedingungen sind wie in Beispiel 1, die Strahlungsdosis beträgt $4 \cdot 10^4$ J/kg. Durch die Bestrahlung verändern sich die Farben in den nicht abgeschirmten Bereichen der Platte wie folgt :

Schicht 1 von Farbton grün nach blaurot
Schicht 2 von Farbton rot nach gold
Schicht 3 von Farbton blaurot nach braun
Schicht 4 von Farbton blaurot nach braun.

Durch die Kombination der Originalfarben mit den durch die Bestrahlung veränderten Farbtönen ergeben sich neben der figürlichen Musterung interessante optisch ansprechende Mischfarbeneffekte.

## Beispiel 3

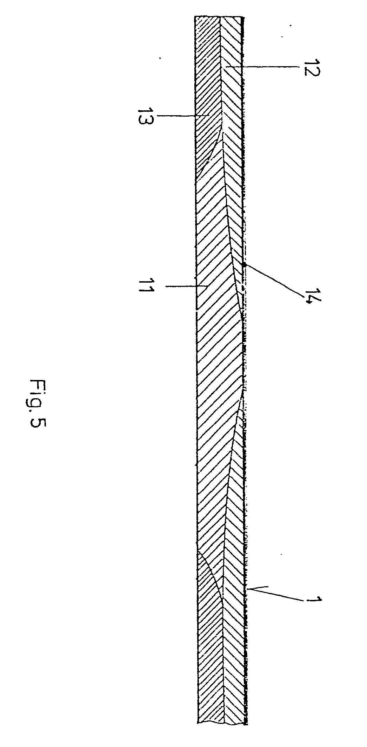

Der in der Figur 5 im Querschnitt dargestellte Formkörper besteht aus einer in 4 Zonen unterschiedlich eingefärbten Celluloseacetat-Platte, die durch Extrusion hergestellt ist (Rezeptur für Celluloseacetat entsprechend Beispiel 1). Die Zonen sind wie folgt eingefärbt :

Zone 11 farblos
Zone 12 0,03 % Solvapermrot-violett R ®, Antrachinonfarbstoff der Hoechst AG
Zone 13 0,01 % Fettrot HRR ®
Zone 14 0,015 % Solvapermschwarz M ® ein Antrachinonfarbstoff der Hoechst AG (Mischfarbstoff Cl 47023, 60727).

Die Platte 1 nach Figur 5 wird mit einer Bleichschablone gem. Figur 4, die mit Löchern 4 versehen ist und eine Dicke von 1 mm aufweist, belegt und auf dieser Seite in einer Anlage gem. Figur 2 mit Elektronen bestrahlt. Die Strahlungsdosis beträgt $4 \cdot 10^4$ J/kg, die weiteren Bestrahlungsdaten entsprechend denen von Beispiel 1. Nach der Bestrahlung zeigen die bestrahlten Zonen die folgenden Farbveränderungen :

Zone 11 unverändert farblos
Zone 12 von Farbton blaurot nach braun
Zone 13 von Farbton rot nach gold
Zone 14 von Farbton blau nach grüngelb.

Die mit dem erfindungsgemäßen Verfahren erzielbare figürliche und farbliche Dessinierung ist beliebig reproduzierbar und mit entsprechend ausgebildeten Schablonen variierbar. Darüber hinaus können die Farbumschläge durch stärkere oder geringere Dosen innerhalb eines Bereiches, in dem der Kunststoff des Formkörpers nicht geschädigt wird, verändert werden. Darüber hinaus hat sich gezeigt, daß der Farbumschlag um so sichtbarer wird, je geringer die Farbstoffkonzentration ist.

## Beispiel 4

Als Formkörper wird eine Weich-PVC-Folie aus einem Weich-PVC-Plastisol durch Streichen und Gelieren hergestellt. Das Weich-PVC-Plastisol hat folgenden Ansatz :

40 Gew.-Teil E-PVC, K-Wert 70
35 Gew.-Teile Masse-PVC, K-Wert 65
26 Gew.-Teile Dioctylphthalatweichmacher
2 Gew.-Teile Epoxidiertes Sojabohnehöl
1 Gew.-Teil Barium/Cadium-Stabilisator
0,1 Gew.-Teil Ceresblau ® GN, ein Antrachinonfarbstoff der Bayer AG (Solvent blue 63 Cl 61520).

Das Plastisol wird auf ein Stahlband gestrichen und ausgeliert. Die Gelierzeit beträgt bei ca. 1 mm Dicke 2,5 Min. bei 200 °C.

Die Weich-PVC-Folie wird mit einer Vorschubgeschwindigkeit von 8 m/m in von einer Elektronenstrahlanlage gem. Figur 2 bestrahlt. Bei einer Beschleunigungsspannung von 800 keV, einer Strahlstromstärke von 9 mA erhält die Folie hierbei eine Strahlendos's von $2 \cdot 10^4$ J/kg. Es ist nun möglich durch Variation der Strahlstromstärke auch die Strahlendosis zu verändern, so daß in entsprechendem Wechsel von Strahlstromstärken die Farbumschläge der Originalfarbe der Weich-PVC-Folie mehr oder weniger stark ausfallen und damit bei der gewählten Originalfarbe Ceresblau GN von den original Blautönen bis hinein in die Grüntöne über Blaugrün stetig wechselnde Übergänge geschaffen werden. Auf diese Weise wird die original uni eingefärbte Folie nach dem erfindungsgemäßen Verfahren mehrfarbig in Blau- und Grüntönen in Durchlaufrichtung abwechselnd dessiniert.

### Beispiel 5

Ein Formkörper wird aus Polyamidgranulat, das mit 0,02 % Ceresblau GN oberflächlich eingefärbt ist, bei 200 °C als 2 mm dicke Platte gepreßt. Auf diese Platte kann wiederum eine Schablone 2 oder 3 entsprechend Figur 3 oder 4 aufgelegt werden und in einer Elektronenstrahlanlage gem. Figur 2 mit einer Strahlungsdosis von $8 \cdot 10^4$ J/kg bestrahlt werden. Nach der Bestrahlung zeigt die Platte in den bestrahlten Bereichen einen wesentlich tieferen dunkleren Blauton gegenüber den nicht bestrahlten Bereichen mit Originalblauton.

Das erfindungsgemäße Verfahren ist jedoch nicht auf die Dessinierung von flächigen ebenen Gebilden beschränkt, sondern es können auch beliebig geformte Körper und Oberflächen dessiniert werden. Beispielsweise können stark profilierte Oberflächen bereits dadurch unterschiedlich farblich gemustert werden, als die Eindringtiefe der Elektronen und damit die absorbierte Energie unterschiedlich ist.

### Ansprüche

1. Verfahren zum Herstellen von farblichen und figürlichen Dessinierungen von Formkörpern aus polymerem Kunststoff, der veränderbare organische Farbstoffe und/oder organische Pigmente als Farbmittel enthält, wobei die Formkörper zumindest teilweise mit den Farbmitteln eingefärbt sind, dadurch gekennzeichnet, daß die Formkörper in ausgewählten bereichen entsprechend der figürlichen Dessinierung Elektronenstrahlen bis zum Erzielen von Farbumschlägen ausgesetzt werden.

2. Verfahren nach Anspruch 1, dadurch gekennzeichnet, daß Kunststoffe und/oder Zuschlagstoffe, die bei geringer Strahlungsdosis bereits Radikale freisetzen, für die Herstellung der Formkörper eingesetzt werden.

3. Verfahren nach Anspruch 2, dadurch gekennzeichnet, daß Formkörper aus cellulosederivaten, wie Cellulose-Acetate, Cellulose-Butyrat und Cellulose-Propionat, eingesetzt werden.

4. Verfahren nach Anspruch 2, dadurch gekennzeichnet, daß Formkörper aus Polyamid, Epoxidharzen, Polyolefinen, wie Polyethylen oder Polypropylen oder Butylkautschuk, eingesetzt werden.

5. Verfahren nach Anspruch 2, dadurch gekennzeichnet, daß Formkörper aus Polyvinylchlorid (PVC) bzw. Weichpolyvinylchlorid eingesetzt werden.

6. Verfahren nach einem der Ansprüche 1 bis 5, dadurch gekennzeichnet, daß kalandrierte, extrudierte, laminierte, gestrichene, spritzgegossene oder auf andere Weise hergestellte ein- oder mehrschichtige Formkörper, die durchgehend oder teilweise eingefärbt, gegebenenfalls transparente oder opake Bereiche aufweisen, durch bestrahlen dessiniert werden.

7. Verfahren nach einem der Ansprüche 1 bis 6, dadurch gekennzeichnet, daß die Eindringtiefe der Elektronenstrahlen in den Formkörper durch Änderung der Beschleunigungsspannung für die Elektronenstrahlen beim Durchführen des Formkörpers durch eine Bestrahlungszone verändert wird, so daß über die Dicke des Formkörpers figürlich abgegrenzte unterschiedliche Farbbereiche entstehen.

8. Verfahren nach einem der Ansprüche 1 bis 7, dadurch gekennzeichnet, daß die Intensität der Elektronenstrahlen (Strahlstromstärke) über die bestrahlte Oberfläche des Formkörpers variiert wird, so daß figürlich abgegrenzte Farbbereiche auf der Oberfläche des Formkörpers entstehen.

9. Verfahren nach einem der Ansprüche 1 bis 8, dadurch gekennzeichnet, daß der Formkörmer einer Strahlungsdosis zwischen $1 \cdot 10^4$ bis $20 \cdot 10^4$ J/kg vorzugsweise $1 \cdot 10^4$ bis $8 \cdot 10^4$ J/kg ausgesetzt wird.

10. Verfahren nach einem der Ansprüche 1 bis 9, dadurch gekennzeichnet, daß die Formkörper während der Bestrahlung mit Elektronenstrahlen partiell mit die Elektronenstrahlen absorbierenden oder reflektierenden Materialien abgedeckt sind.

11. Verfahren nach Anspruch 10, dadurch gekennzeichnet, daß Schablonen aus Elektronenstrahlen absorbierenden reflektierenden Materialien mit Durchbrechungen für figürliche Dessinierung, wie Bleischablonen oder Aluminiumschablonen, eingesetzt werden.

### Claims

1. Process for the production of coloured and figurative patterns of moulded articles made of

0 034 707

plastics, which contains variable organic colourants and/or organic pigments as colouring agent, with the moulded articles being coloured at least partially with the moulded articles being coloured at least partially with the colouring agents, characterised in that the moulded articles are exposed in selected regions corresponding to the figurative patterning, to electron irradiation up to the attainment of colour changes.

2. Process according to claim 1, characterised in that plastics and/or additional substances which already liberate radicals at lower radiation doses are employed for the production of the moulded articles.

3. Process according to claim 2, characterised in that moulded articles formed of cellulose derivatives, such as cellulose acetate, cellulose butyrate and cellulose propionate, are employed.

4. Process according to claim 2, characterised in that moulded articles formed of polyamide, epoxy resins, polyolefins, such as polyethylene or polypropylene, or butyl rubber are employed.

5. Process according to claim 2, characterised in that moulded articles formed of polyvinylchloride (PVC) or soft polyvinylchloride are employed.

6. Process according to one of claims 1 to 5, characterised in that calandered, extruded, laminated, coated, injection moulded or otherwise produced mono- or multi-layered moulded articles, which are coloured throughout or partially, optionally exhibiting transparent or opaque regions, are patterned by irradiation.

7. Process according to one of claims 1 to 6, characterised in that the penetration depth of the electron beams into the moulded articles is varied by alteration of the acceleration potential for the electron beams on conveying the moulded article through an irradiating zone, so that figuratively defined differently coloured regions exist over the thickness of the moulded article.

8. Process according to one of claims 1 to 7, characterised in that the intensity of the electron beams (beam current strength) is varied over the irradiated surface of the moulded article so that figuratively defined coloured regions exist on the surface of the moulded article.

9. Process according to one of claims 1 to 8, characterised in that the moulded article is exposed to a radiation dose between $1 \times 10^4$ to $20 \times 10^4$ J/kg, preferably $1 \times 10^4$ to $8 \times 10^4$ J/kg.

10. Process according to one of claims 1 to 9, characterised in that the moulded articles are partially shielded during the irradiation with electron beams with materials absorbing or reflecting the electron beams.

11. Process according to claim 10, characterised in that templates are employed formed of electron beam-absorbing reflecting materials with cut-outs for figurative patterning, such as lead templates or aluminium templates.


## Revendications

1. Procédé pour la création de dessins colorés et figurés dans des corps profilés en matière plastique polymère qui contient des matières colorantes organiques altérables et/ou des pigments organiques en tant que colorants, les corps profilés étant colorés dans la masse tout au moins en partie avec les colorants, caractérisé par le fait que dans des zones sélectionnées correspondant au dessin figuré, on expose les corps profilés à des rayons d'électrons jusqu'à l'obtention des virages des couleurs.

2. Procédé selon la revendication 1, caractérisé par le fait que pour la fabrication des corps profilés, on utilise des matières plastiques et/ou des produits d'addition qui libèrent déjà des radicaux en cas de faibles doses de rayonnement.

3. Procédé selon la revendication 2, caractérisé par le fait que l'on utilise des corps profilés constitués de dérivés de la cellulose, comme les acétates de cellulose, le butyrate de cellulose et le propionate de cellulose.

4. Procédé selon la revendication 2, caractérisé par le fait que l'on utilise des corps profilés en polyamide, en résines époxy, en polyoléfines, comme le polyéthylène, le polypropylène ou du caoutchouc butyle.

5. Procédé selon la revendication 2, caractérisé par le fait qu'on utilise des corps profilés en chlorure de polyvinyle (PVC) ou en chlorure de polyvinyle souple.

6. Procédé selon l'une des revendications 1 à 5, caractérisé par le fait que par rayonnement on réalise des dessins dans des corps profilés mono- ou multicouches calandrés, extrudés, laminés, doublés, moulés par injection ou fabriqués d'autres façons, qui sont colorés dans la masse complètement ou partiellement et comportent éventuellement des zones transparentes ou opaques.

7. Procédé selon l'une des revendications 1 à 6, caractérisé par le fait que l'on modifie la profondeur de pénétration des rayons d'électrons dans le corps profilé en faisant varier la tension d'accélération pour les rayons d'électrons lors du passage du corps profilé à travers une zone de rayonnement, de façon à réaliser différentes zones de couleurs à contour figuré en fonction de l'épaisseur du corps profilé.

8. Procédé selon l'une des revendications 1 à 7, caractérisé par le fait que l'on fait varier l'intensité des rayons d'électrons (intensité du courant de faisceau) en fonction de la surface rayonnée du corps profilé, de façon à réaliser sur la surface du corps profilé des zones colorées à contour figuré.

9. Procédé selon l'une des revendications 1 à 8, caractérisé par le fait que l'on expose le corps profilé à une dose de rayonnement entre $1\text{-}10^4$ à $20\text{-}10^4$ J/kg, de préférence $1\text{-}10^4$ à $8\text{-}10^4$ J/kg.

7

10. Procédé selon l'une des revendications 1 à 9, caractérisé par le fait que pendant l'exposition aux rayons d'électrons, on recouvre partiellement les corps profilés de matériaux absorbant ou réfléchissant les rayons d'électrons.

11. Procédé selon la revendication 10, caractérisé par le fait qu'on utilise des patrons en matériaux absorbant réfléchissant les rayons d'électrons avec des passages pour le dessin diguré, comme des patrons en plomb ou en aluminium.

Fig. 1

Fig. 2

Fig.3

Fig.4

Fig. 5